# EUROPEAN PATENT APPLICATION

(11) **EP 2 985 686 A1**
(43) Date of publication of application: **17.02.2016**
(21) Application number: 15180594.2
(22) Date of filing: 11.08.2015
(51) Int. Cl.: G06F 3/0487, G06F 3/041, G06F 3/01, G06F 1/16

(54) **METHOD AND FOLDABLE ELECTRONIC DEVICE FOR PROCESSING IMAGES**

(30) Priority: 13.08.2014 KR 20140105225
(71) Applicant: Samsung Electronics Co., Ltd., Gyeonggi-do 16677 (KR)
(72) Inventor: KIM, Nam-Hoi, Gyeonggi-do (KR); AHN, Dale, Seoul (KR)
(74) Representative: Grootscholten, Johannes A.M.

(57) **Abstract**

A method includes displaying an image on a display of an electronic device, detecting a change in a curvature of a display, detecting a change in a gaze angle on the display, in response to detecting the change in the curvature of the display, obtaining a change in a gaze on the flexible display, and changing the image displayed on the display based on the change in the curvature and the change in the gaze angle. An electronic device includes a processor configured to detect a change in a curvature of the display from a curvature sensor, in response to detecting the change in the curvature of the display, detect a change in a gaze angle on the display from a gaze detection sensor, and cause the display to change the image based on the detected change in the curvature and the detected change of the gaze angle.

## Description

### TECHNICAL FIELD

The present disclosure relate to a method and an electronic device for processing an image.

### BACKGROUND

With the development of information and communication technology and semiconductor technology, various electronic devices are developing into multimedia devices which provide various multimedia services. For example, the electronic device may provide various multimedia services such as a messenger service, a broadcasting service, a wireless Internet service, a camera service, and a music replay service.

Such an electronic device may include a dual display with two or more screens, and may include a flexible display which is bendable or foldable. Such displays offer an advantage of large screens and portability simultaneously and thus attract attention from consumers.

### SUMMARY

The electronic device with the dual display or flexible display provides an image service only to the extent that the display screen is rotated or an image is zoomed in/out as the shape of the display changes. For example, even when a part of the display is bent or folded, the image of the screen is displayed as it is and thus a sense of immersion may be reduced and dizziness may be caused. Therefore, there is a need for an image service which can provide more natural and more realistic visual effects regardless of the shape of the display.

Aspects of the present disclosure are to address at least the above-mentioned problems and/or disadvantage and to provide at least the advantages described below. Accordingly, an aspect of the present disclosure is to provide a method and apparatus for processing an image, which can control an image displayed on a display by reflecting an angle of the display and a viewing angle.

Another aspect of the present disclosure is to provide a method and apparatus for processing an image, which can change an image displayed on a display according to a change in a curvature of the display and a change in a gaze.

Another aspect of the present disclosure is to provide a method and apparatus for processing an image, which can change an image displayed on a display based on a tilt and acceleration according to a change in a curvature of the display.

Another aspect of the present disclosure is to provide a method and apparatus for processing an image, which can change an image displayed on a display according to a change in a curvature of the display and a change in pressure.

In accordance with an aspect of the present disclosure, a method of an electronic device is provided. The method includes: detecting a change in a curvature of a display of the electronic device; detecting a change in a gaze on the display; and changing an image displayed on the display based on the detected change in the curvature and the change in the gaze.

In accordance with another aspect of the present disclosure, an electronic device is provided. The electronic device includes: a display for displaying an image; and a processor configured to control to: detect a change in a curvature of the display of the electronic device; detect a change in a gaze on the display; and change the image displayed on the display based on the detected change in the curvature and the change in the gaze.

According to various exemplary embodiments, a method and apparatus for processing an image can provide a reality by controlling an image displayed on a display by reflecting an angle of the display and a viewing angle.

According to various exemplary embodiments, a method and apparatus for processing an image can change an image displayed on a display according to a change in a curvature of the display and a change in a gaze.

According to various exemplary embodiments, a method and apparatus for processing an image can change an image displayed on a display based on a tilt and acceleration according to a change in a curvature of the display.

According to various exemplary embodiments, a method and apparatus for processing an image can change an image displayed on a display according to a change in a curvature of the display and a change in pressure.

Other aspects, advantages and salient features of the disclosure will become apparent to those skilled in the art from the following detailed description, which, taken in conjunction with the annexed drawings, discloses exemplary embodiments of the disclosure

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram showing an electronic device according to an exemplary embodiment of the present disclosure;
FIG. 2 illustrates a block diagram showing an image processing module according to an exemplary embodiment of the present disclosure;
FIG. 3 illustrates a flowchart showing a method for changing an image displayed on a display according to an exemplary embodiment of the present disclosure;
FIG. 4 illustrates a view showing a state in which one side of a display is bent according to an exemplary embodiment of the present disclosure;
FIG. 5 illustrates a view showing a state in which both sides of a display are bent according to an exemplary embodiment of the present disclosure;
FIGS. 6A and 6B illustrate a view showing a state in which a display is placed horizontally according to an exemplary embodiment of the present disclosure;
FIGS. 7A, 7B, 7C and 7D illustrate a view showing a state in which a part of a display is inclined according to an exemplary embodiment of the present disclosure;
FIGS. 8A and 8B illustrate views showing a screen configuration for changing an image displayed on a display according to an exemplary embodiment of the present disclosure;
FIG. 9 illustrates a flowchart showing a method for changing an image displayed on a display according to an exemplary embodiment of the present disclosure;
FIGS. 10A, 10B and 10C illustrate views showing a screen configuration for changing an image displayed on a display according to an exemplary embodiment of the present disclosure;
FIG. 11 illustrates a flowchart showing a method for changing an image displayed on a display according to an exemplary embodiment of the present disclosure;
FIGS. 12A, 12B and 12C illustrate views showing a screen configuration for changing an image displayed on a display according to an exemplary embodiment of the present disclosure;
FIG. 13 illustrates a flowchart showing a method for changing an image displayed on a display according to an exemplary embodiment of the present disclosure;
FIGS. 14A, 14B and 14C illustrate views showing a screen configuration for changing an image displayed on a display according to an exemplary embodiment of the present disclosure; and
FIG. 15 illustrates a block diagram showing an electronic device according to various exemplary embodiments of the present disclosure.
Throughout the drawings, like reference numerals will be understood to refer to like parts, components and structures.

### DETAILED DESCRIPTION

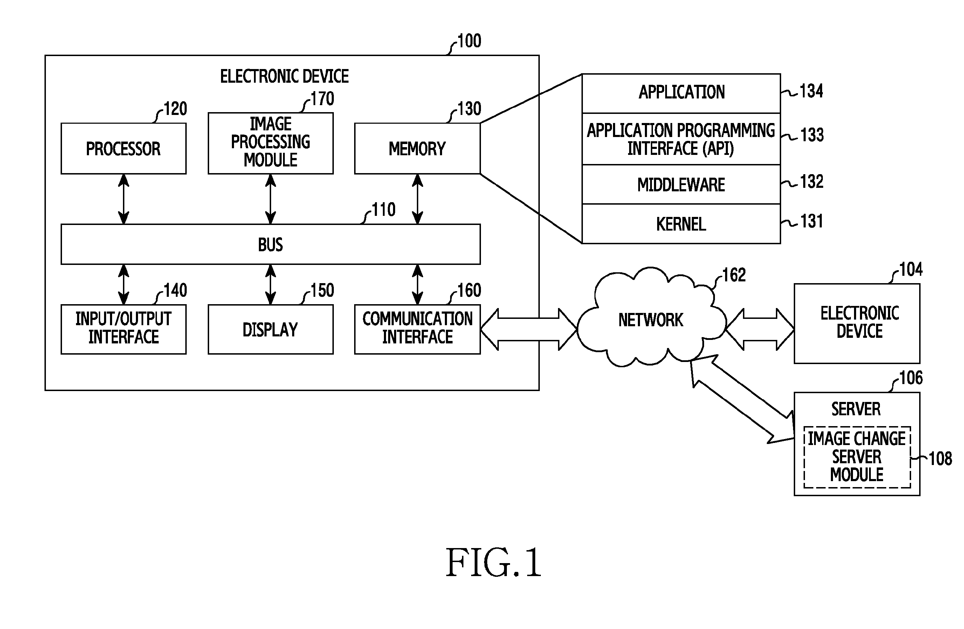

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Hereinafter, various exemplary embodiments of the present disclosure will be explained with reference to the accompanying drawings. Although specific embodiments of the present disclosure are illustrated in the drawings and relevant detailed descriptions are provided, various changes can be made and various exemplary embodiments may be provided. Accordingly, various exemplary embodiments of the present disclosure are not limited to the specific embodiments and should be construed as including all changes, equivalents or substitutes included in the ideas and technological scopes of exemplary embodiments of the present disclosure. In the explanation of the drawings, similar reference numerals are used for similar elements.

The term "include" or "may include" used in the exemplary embodiments of the present disclosure indicates the presence of disclosed corresponding functions, operations, elements, and the like, and do not limit additional one or more functions, operations, elements, and the like. In addition, it should be understood that the term "include" or "have" used in the exemplary embodiments of the present disclosure is to indicate the presence of features, numbers, steps, operations, elements, parts, or a combination thereof described in the specifications, and do not preclude the presence or addition of one or more other features, numbers, steps, operations, elements, parts, or a combination thereof.

The term "or" or "A or/and B" used in the exemplary embodiments of the present disclosure includes any and all combinations of words enumerated with it. For example, "A or B" or "at least one of A or/and B" mean including A, including B, or including both A and B.

Although the terms such as "first" and "second" used in the various exemplary embodiments of the present disclosure may modify various elements of the various exemplary embodiments, these terms do not limit the corresponding elements. For example, these terms do not limit an order and/or importance of the corresponding elements. These terms may be used for the purpose of distinguishing one element from another element. For example, a first electronic device and a second electronic device all indicate electronic devices and may indicate different electronic devices. For example, a first element may be named a second element without departing from the scope of right of the various exemplary embodiments of the present disclosure, and similarly, a second element may be named a first element.

It will be understood that, when an element is mentioned as being "connected" or "coupled" to another element, the element may be directly connected or coupled to another element, and there may be an intervening element between the element and another element. To the contrary, it will be understood that, when an element is mentioned as being "directly connected" or "directly coupled" to another element, there is no intervening element between the element and another element.

The terms used in the various exemplary embodiments of the present disclosure are for the purpose of describing specific exemplary embodiments only and are not intended to limit various exemplary embodiments of the present disclosure. As used herein, the singular forms are intended to include the plural forms as well, unless the context clearly indicates otherwise.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the various exemplary embodiments.

An electronic device according to various exemplary embodiments of the present disclosure can be a device that is equipped with a display function. For example, the electronic device can include at least one of a smartphone, a tablet personal computer (PC), a mobile phone, a video phone, an electronic book reader, a desktop PC, a laptop PC, a netbook computer, a Personal Digital Assistant (PDA), a Portable Multimedia Player (PMP), an MP3 player, a mobile medical machine, a camera, or a wearable device (for example, a head-mounted-device (HMD) such as electronic glasses, electronic clothing, an electronic bracelet, an electronic necklace, an electronic appcessory, electronic tattoos, or a smart watch).

According to an exemplary embodiment, the electronic device can be a smart home appliance which is equipped with a display function. For example, the smart home appliance can include at least one of a television, a Digital Video Disk (DVD) player, a stereo, a refrigerator, an air conditioner, a cleaner, an oven, a microwave oven, a washing machine, an air cleaner, a set-top box, a TV box (for example, Samsung HomeSync^{®}, Apple TV^{®}, or Goggle TV^{®}), a game console, an electronic dictionary, an electronic key, a camcorder, or an electronic album.

According to an exemplary embodiment, the electronic device can include at least one of various medical machines (for example, Magnetic Resonance Angiography (MRA), Magnetic Resonance Imaging (MRI), Computed Tomography (CT), a tomograph, an ultrasound machine, and the like), a navigation device, a Global Positioning System (GPS) receiver, an Event Data Recorder (EDR), a Flight Data Recorder (FDR), an automotive infotainment device, electronic equipment for ship (for example, navigation equipment for ship, a gyro compass, and the like), avionics, a security device, or an industrial or home robot.

According to an exemplary embodiment, the electronic device can include at least one of a part of furniture or a building/a structure including a display function, an electronic board, an electronic signature receiving device, a projector, and various measurement devices (for example, devices for measuring water, power, gas, radio waves, and the like).

The electronic device according to various exemplary embodiments of the present disclosure can be one or a combination of one or more of the above-mentioned devices. In addition, the electronic device according to various exemplary embodiments of the present disclosure can be a flexible device. In addition, it is obvious to an ordinary skilled person in the related art that the electronic device according to various exemplary embodiments of the present disclosure is not limited to the above-mentioned devices.

A display according to various exemplary embodiments of the present disclosure can include a flexible display or a dual display. For example, the flexible display can have its shape changed to a least one of stretching, shrinking, bending, folding, twisting, crooking, unfolding, and the like. In addition, such a display can include a double-sided display which can monitor both surfaces, and can apply touch screen technology.

Hereinafter, an electronic device according to various exemplary embodiments will be explained with reference to the accompanying drawings. The term "user" used in the various exemplary embodiments can refer to a person who uses the electronic device or a device that uses the electronic device (for example, an artificial intelligence electronic device).

FIG. 1 illustrates a block diagram showing an electronic device according to an exemplary embodiment of the present disclosure.

Referring to FIG. 1, the electronic device 100 can include a bus 110, a processor 120, a memory 130, an input and output interface 140, a display 150, a communication interface 160, and an image processing module 170. According to an exemplary embodiment, the image processing module 170 can be included in the processor 120 and operated or can be included in a separate module and interwork with the processor 120.

The bus 110 can be a circuit which connects the above-described elements with one another and transmits communication (for example, a control message) between the above-described elements.

The processor 120 can receive instructions from the other elements (for example, the memory 130, the input and output interface 140, the display 150, the communication interface 160, or the image processing module 170) via the bus 110, decipher the instructions, and perform calculation or data processing according to the deciphered instructions.

The memory 130 can store instructions or data which is received from or generated by the processor 120 or the other elements (for example, the input and output interface 140, the display 150, the communication interface 160, the image processing module 170, and the like).

For example, the memory 130 can include programming modules such as a kernel 131, middleware 132, an Application Programming Interface (API) 133, an application 134, and the like. Each of the above-described programming modules can be configured by software, firmware, hardware, or a combination of two or more of them.

According to an exemplary embodiment, the kernel 131 can control or manage system resources (for example, the bus 110, the processor 120, the memory 130, and the like) which are used for performing operations or functions implemented in the other programming modules, for example, the middleware 132, the API 133, or the application 134. In addition, the kernel 131 can provide an interface for allowing the middleware 132, the API 133, or the application 134 to access an individual element of the electronic device 100 and control or manage the element.

According to an exemplary embodiment, the middleware 132 can serve as an intermediary to allow the API 133 or the application 134 to communicate with the kernel 131 and exchange data with the kernel 131. In addition, the middleware 132 can perform controlling (for example, scheduling or load balancing) with respect to work requests received from the application 134, for example, by giving priority to use the system resources of the electronic device 100 (for example, the bus 110, the processor 120, the memory 130, and the like) to at least one of the applications 134.

According to an exemplary embodiment, the API 133 can be an interface for allowing the application 134 to control a function provided by the kernel 131 or the middleware 132, and, for example, can include at least one interface or function (for example, instructions) for controlling a file, controlling a window, processing an image, or controlling a text.

According to an exemplary embodiment, the application 134 can include a Short Message Service (SMS)/Multimedia Messaging Service (MMS) application, an email application, a calendar application, a notification application, a health care application (for example, an application for measuring exercise or a blood sugar), an environment information application (for example, an application for providing information on atmospheric pressure, humidity, or temperature), and the like. Additionally or alternatively, the application 134 can be an application related to information exchange between the electronic device 100 and an external electronic device (for example, an electronic device 104). For example, the application related to the information exchange can include a notification relay application for relaying specific information to an external electronic device or a device management application for managing an external electronic device.

For example, the notification relay application can include a function of relaying notification information generated by other applications of the electronic device 100 (for example, the SMS/MMS application, the email application, the health care application, the environment information application, and the like) to an external electronic device (for example, the electronic device 104). Additionally or alternatively, the notification relay application can receive notification information from an external electronic device (for example, the electronic device 104) and can relay the same to the user. For example, the device management application can manage (for example, install, delete or update) a function regarding at least part of an external electronic device (for example, the electronic device 104) communicating with the electronic device 100 (for example, turning on/off the external electronic device (or some parts) or adjusting brightness (or resolution) of a display), an application operating in the external electronic device or a service provided by the external electronic device (for example, a calling service or a message service).

According to various exemplary embodiments, the application 134 can include an application which is specified according to the attribute (for example, a kind of an electronic device) of an external electronic device (for example, the electronic device 104). For example, when the external electronic device is an MP3 player, the application 134 can include an application related to music replay. Similarly, when the external electronic device is a mobile medical device, the application 134 can include an application related to health care. According to an exemplary embodiment, the application 134 can include at least one of an application specified by the electronic device 100 or an application received from an external electronic device (for example, a server 106 or the electronic device 104).

According to an exemplary embodiment, the input and output interface 140 can transmit instructions or data input by a user through an input and output device (for example, a sensor, a keyboard or a touch screen) to the processor 120, the memory 130, the communication interface 160, or the image processing module 170 through the bus 110, for example. For example, the input and output interface 140 can provide data on a user's touch input through a touch screen to the processor 120. In addition, the input and output interface 140 can output instructions or data received from the processor 120, the memory 130, the communication interface 160, or the image processing module 170 through the bus 110 through the input and output device (for example, a speaker or a display). For example, the input and output interface 140 can output voice data processed through the processor 120 to the user through a speaker.

According to an exemplary embodiment, the display 150 can display a variety of information (for example, multimedia data, text data, and the like) for the user.

According to an exemplary embodiment, the communication interface 160 can connect communication between the electronic device 100 and an external device (for example, the electronic device 104 or a server 106). For example, the communication interface 160 can be connected to a network 162 via wireless communication or wire communication to communicate with the external device. The wireless communication can include at least one of Wireless Fidelity (WiFi), Bluetooth (BT), Near Field Communication (NFC), a GPS, or cellular communication (for example, LTE, LTE-A, CDMA, WCDMA, UMTS, WiBro, GSM, and the like). The wire communication can include at least one of a Universal Serial Bus (USB), a High Definition Multimedia Interface (HDMI), a Recommended Standard 232 (RS-232), or Plain Old Telephone Service (POTS).

According to an exemplary embodiment, the network 162 can be a telecommunications network. The telecommunications network can include at least one of a computer network, Internet, Internet of things, or a telephone network. According to an exemplary embodiment, a protocol for communicating between the electronic device 100 and the external device (for example, a transport layer protocol, a data link layer protocol or a physical layer protocol) can be supported in at least one of the application 134, the application programming interface 133, the middleware 132, the kernel 131, or the communication interface 160.

According to an exemplary embodiment, the image processing module 170 can detect a change in the curvature of the display 150 and a change in the gaze, and change an image displayed on the display 150 according to the change in the curvature and the change in the gaze. According to an exemplary embodiment, the image processing module 170 can control the image displayed on the display 150 by reflecting a screen angle and a viewing angle using bending of the display 150, an angle change speed, acceleration, or gravity. The image processing module 170 will be explained in detail below.

According to an exemplary embodiment, the server 106 can support driving of the electronic device 100 by performing at least one of the operations (functions) implemented in the electronic device 100. For example, the server 106 can include an image processing server module 108 to support the image processing module 170 implemented in the electronic device 100. According to an exemplary embodiment, the image processing server module 108 can include at least one element of the image processing module 170 and perform at least one of the operations implemented in the image processing module 170 (for example, on behalf of the image processing module 170).

According to an exemplary embodiment, the image processing module 170 can process at least part of information acquired from the other elements (for example, the processor 120, the memory 130, the input and output interface 140, the communication interface 160, or the like), and provide the information to the user in various methods. For example, the image processing module 170 can control at least some function of the electronic device 100 using the processor 120 or independently from the processor 120, such that the electronic device 100 interworks with another electronic device (for example, the electronic device 104 or the server 106). According to an exemplary embodiment, at least one element of the image processing module 170 can be included in the server 106 (for example, the image processing server module 108), and can be supported with at least one operation to be implemented in the image processing module 170 by the server 106.

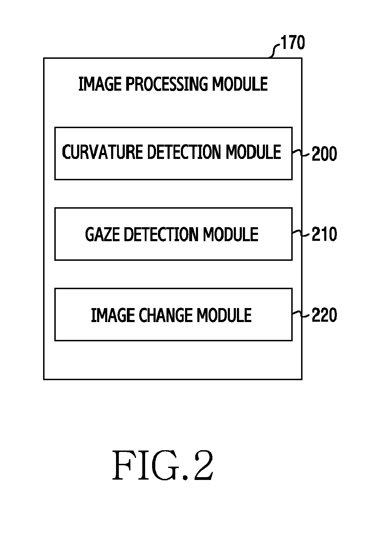

FIG. 2 illustrates a block diagram showing an image processing module according to an exemplary embodiment of the present disclosure.

Referring to FIG. 2, the image processing module 170 can include a curvature detection module 200, a gaze detection module 210, and an image change module 220. According to an exemplary embodiment, the image processing module 170 can further include an additional module.

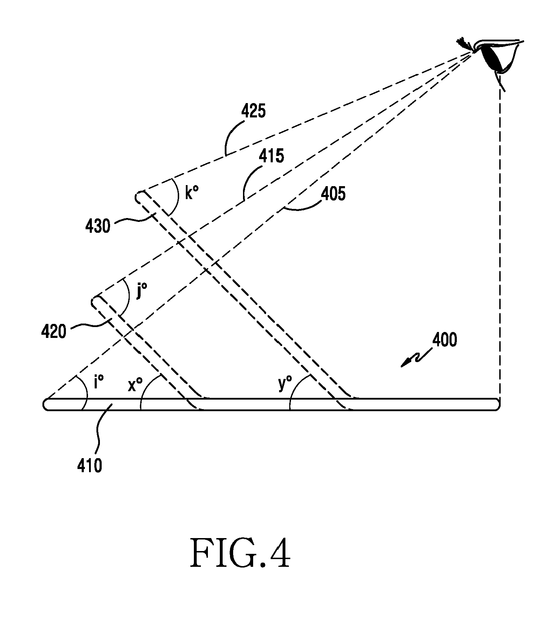

According to an exemplary embodiment, the curvature detection module 200 can detect a change in the curvature of a display. According to an exemplary embodiment, the curvature detection module 200 can detect the degree of bending or crooking of the display through at least one sensor (for example, a 9-axis sensor, a flex sensor, or a curvature sensor) installed in a specific area. According to an exemplary embodiment, as shown in FIG. 4, the curvature detection module 200 can determine what angle each part 410, 420, 430 of the display 400 forms with the surface through the 9-axis sensor and the flex sensor installed in the specific area. According to an exemplary embodiment, the curvature detection module 200 can detect a movement of each part 410, 420, 430 of the display 400 with respect to at least one of a yaw angle, a pitch angle, and a roll angle. For example, when the display 400 is placed on the surface horizontally as shown in the view 405, the curvature detection module 200 can determine that the first part 410 of the display 400 is placed on the surface horizontally through the 9-axis sensor and the flex sensor. In another example, when the second part 420 of the display 400 is bent by a specific angle (x°) as shown in the view 415, the curvature detection module 200 can measure the angle (x°) between the second part 420 and the surface. Likewise, when the third part 430 of the display 400 is bent by a specific angle (y°) as shown in the view 425, the curvature detection module 200 can measure the angle (y°) between the third part 430 and the surface.

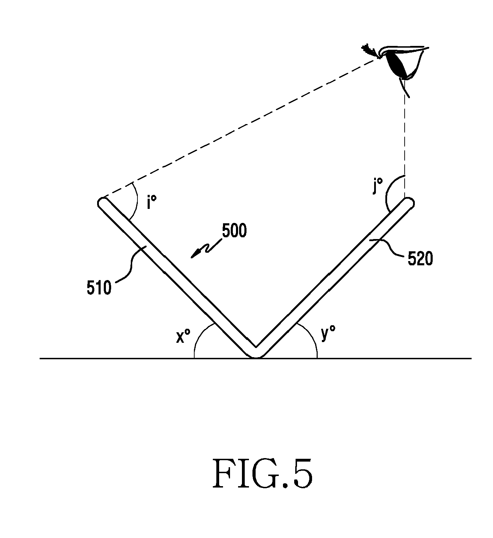

According to an exemplary embodiment, when both sides of a display 500 are bent as shown in FIG. 5, the curvature detection module 200 can detect an angle (x° or y°) between one side 510 or 520 of the display 500 and the surface. However, this should not be considered as limiting and the curvature detection module 200 can detect the degree of bending on various parts of the display.

According to an exemplary embodiment, the gaze detection module 210 can detect a change in the gaze on the display. According to an exemplary embodiment, the gaze detection module 210 can detect a user's gaze on the display through at least one image sensor installed in a specific area. For example, the gaze detection module 210 can detect an angle between a bent part of the display and the gaze through the image sensor. According to an exemplary embodiment, as shown in FIG. 4, the gaze detection module 210 can determine an angle between each part 410, 420, 430 of the display 400 and the gaze through the image sensor installed in each part 410, 420, 430 of the display 400. For example, when the display 400 is placed on the surface horizontally as shown in view (a), the gaze detection module 210 can detect an angle (i°) between the first part 410 of the display 400 and the gaze through the image sensor. In another example, when the second part 420 of the display 400 is bent by a specific angle (x°) as shown in view (b), the gaze detection module 210 can detect an angle (j°) between the second part 420 and the gaze. Likewise, when the third part 430 of the display 400 is bent by a specific angle (y°) as shown in view (c), the gaze detection module 210 can detect an angle (k°) between the third part 430 and the gaze.

According to an exemplary embodiment, when both sides of the display 500 are bent as shown in FIG. 5, the gaze detection module 210 can detect an angle (i° or j°) between one side 510 or 520 of the display 500 and the gaze. However, this should not be considered as limiting and the gaze detection module 210 can measure an angle with a gaze on various parts of the display.

According to an embodiment, the image change module 220 can change an image displayed on the display according to a change in the curvature and a change in the gaze which are detected. According to an embodiment, the image change module 220 can change the image displayed on the display based on the change in the gaze (for example, a change in the angle between the display and the gaze) which is accompanied by the change in the curvature of the display (for example, a change in the angle between the display and the surface). For example, when the electronic device is placed horizontally and the user views three-dimensional (3D) objects 610 and 620 displayed on a display 600, the image change module 220 can display only top surfaces 612 and 622 of the objects 610 and 620.

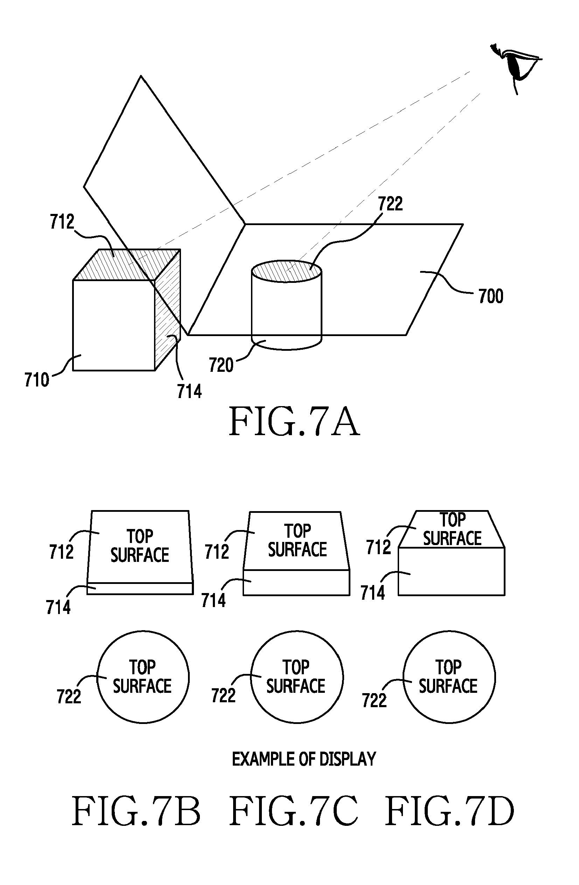

However, when a part of the electronic device is inclined and the user views 3D objects 710 and 720 displayed on a display 700 as shown in FIGS. 7A, 7B, 7C and 7D, the image change module 220 can display the corresponding object 710 differently according to an angle of the inclined part of the display 700 and an angle between the object 710 and the gaze. For example, with respect to the object 710 displayed on the inclined part of the display 700, the image change module 220 can display not only a top surface 712 of the object 710 but also a side surface 714 based on the angle of the inclined part of the display 700 and the gaze angle. Therefore, the object 710 can be displayed on the display 700 in three dimensions, and can be displayed in various forms by reflecting a real viewing angle. On the other hand, the object 720 displayed on the horizontally placed part of the display 700 can have only its top surface 722 viewed.

According to an exemplary embodiment, the image change module 220 can display the corresponding object 710 differently according to the angle of the inclined display 700. For example, when the angle of the inclined display 700 is small, the display 700 can display the corresponding object 710 as shown in view (a). In addition, as the angle of the inclined display 700 is greater, the side surface 714 of the corresponding object 710 is more displayed on the display 700 as shown in view (b) or (c). However, this should not be considered as limiting and the image change module 220 can display the object variously according to the angle of the inclined display 700.

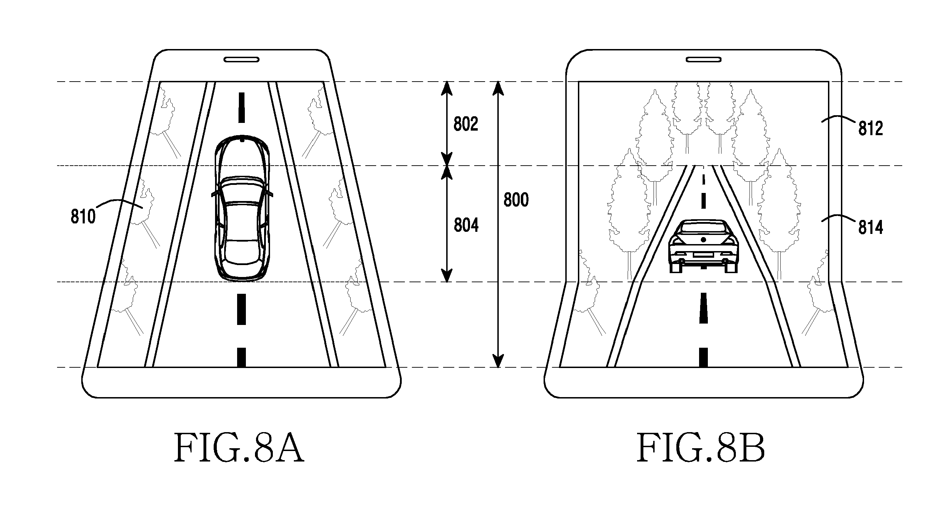

According to an exemplary embodiment, the image change module 220 can change a 3D object by reflecting a viewing angle when photographing a 3D image through a depth camera. For example, when the user views a 3D image 810 displayed on a display 800 placed horizontally as shown in FIG. 8A, and inclines parts 802 and 804 of the display 800 in the middle of viewing the 3D image 810 as shown in FIG. 8B, the image change module 220 can change the image 812, 814 displayed on the inclined part. According to an exemplary embodiment, the image change module 220 can change the 3D image in proportion to the inclination speed of the display 800. According to an exemplary embodiment, the image change module 220 can change the 3D image in proportion to the inclination angle of the display 800. However, this should not be considered as limiting and the image change module 220 can change the image by reflecting a viewing angle in the curvature of the display 800.

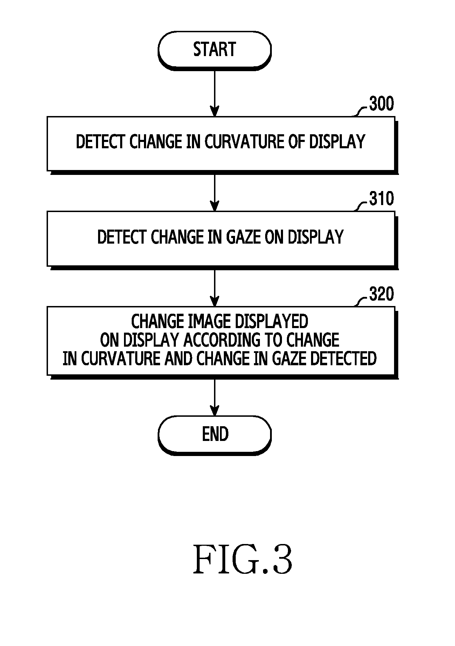

FIG. 3 illustrates a flowchart showing a method for changing an image displayed on a display according to an exemplary embodiment of the present disclosure.

Referring to FIG. 3, in operation 300, an electronic device (for example, the electronic device 100) can detect a change in a curvature of a display of the electronic device. The display can include a flexible display or a dual display. According to an exemplary embodiment, the electronic device can detect the degree of bending or crooking of the display through at least one sensor (for example, a 9-axis sensor, a flex sensor, etc.) installed in a specific area For example, the flex sensor can be mounted in a bezel.

According to an exemplary embodiment, as shown in FIG. 4, the electronic device can determine what angle each part 410, 420, 430 of the display 400 forms with the surface through the 9-axis sensor and the flex sensor installed in the specific area. According to an exemplary embodiment, the curvature detection module 200 can detect a movement of each part 410, 420, 430 of the display 400 with respect to at least one of a yaw angle, a pitch angle, and a roll angle. For example, when the display 400 is placed on the surface horizontally as shown in view (a), the electronic device can determine that the first part 410 of the display 400 is placed on the surface horizontally through the 9-axis sensor and the flex sensor. In another example, when the second part 420 of the display 400 is bent by a specific angle (x°) as shown in view (b), the electronic device can measure the angle (x°) between the second part 420 and the surface. Likewise, when the third part 430 of the display 400 is bent by a specific angle (y°) as shown in view (c), the electronic device can measure the angle (y°) between the third part 430 and the surface.

According to an exemplary embodiment, when both sides of the display 500 are bent as shown in FIG. 5, the electronic device can detect an angle (x° or y°) between one side 510 or 520 of the display 500 and the surface. However, this should not be considered as limiting and the electronic device can detect the degree of bending on various parts of the display.

In operation 310, the electronic device can detect a change in a gaze on the display. According to an exemplary embodiment, the electronic device can detect a user's gaze on the display through at least one image sensor installed in a specific area. For example, the electronic device can detect an angle between a bent part of the display and the gaze through the image sensor.

According to an exemplary embodiment, as shown in FIG. 4, the electronic device can determine an angle between each part 410, 420, 430 of the display 400 and the gaze through the image sensor installed in each part 410, 420, 430 of the display 400. For example, when the display 400 is placed on the surface horizontally as shown in view (a), the electronic device can detect an angle (i°) between the first part 410 of the display 400 and the gaze through the image sensor. In another example, when the second part 420 of the display 400 is bent by a specific angle (x°) as shown in view (b), the electronic device can detect an angle (j°) between the second part 420 and the gaze. Likewise, when the third part 430 of the display 400 is bent by a specific angle (y°) as shown in view (c), the electronic device can detect an angle (k°) between the third part 430 and the gaze.

According to an exemplary embodiment, when both sides of the display 500 are bent as shown in FIG. 5, the electronic device can detect an angle (i° or j°) between one side 510 or 520 of the display 500 and the gaze. However, this should not be considered as limiting and the electronic device can measure an angle with a gaze on various parts of the display.

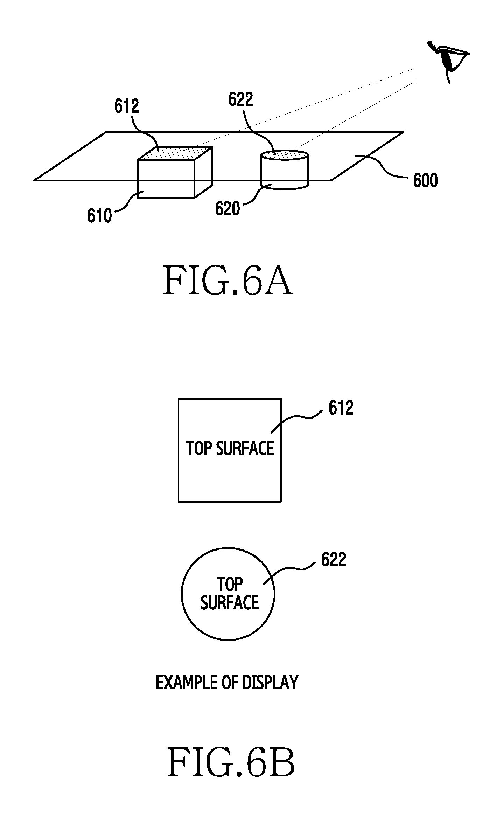

In operation 320, the electronic device can change an image displayed on the display according to the detected change in the curvature and the change in the gaze which are detected. According to an exemplary embodiment, the electronic device can change the image displayed on the display based on the change in the gaze on the display (for example, a change in the angle between the display and the gaze) which is accompanied by the change in the curvature (for example, a change in the angle between the display and the surface) of the display. For example, when the electronic device is placed horizontally and the user views three-dimensional (3D) objects 610 and 620 displayed on the display 600, the electronic device can display only the top surfaces 612 and 622 of the objects 610 and 620 as shown in FIGS. 6A and 6B.

However, when a part of the electronic device is inclined and the user views 3D objects 710 and 720 displayed on the display 700 as shown in FIGS. 7A, 7B, 7C and 7D, the electronic device can display the corresponding object 710 differently according to an angle of the inclined part of the display 700 and an angle between the object 710 and the gaze. For example, with respect to the object 710 displayed on the inclined part of the display 700, the electronic device can display not only the top surface 712 of the object 710 but also the side surface 714 based on the angle of the inclined part of the display 700 and the gaze angle. Therefore, the object 710 can be displayed on the display 700 in three dimensions, and can be displayed in various forms by reflecting a real viewing angle. On the other hand, the object 720 displayed on the horizontally placed part of the display 700 can have only its top surface 722 viewed.

According to an exemplary embodiment, the electronic device can display the corresponding object 710 differently according to the angle of the inclined display 700. For example, when the angle of the inclined display 700 is small, the display 700 can display the corresponding object 710 as shown in view (a). In addition, as the angle of the inclined display 700 is greater, the side surface 714 of the corresponding object 710 is more displayed on the display 700 as shown in view (b) or (c). However, this should not be considered as limiting and the electronic device can display the object variously according to the angle of the inclined display 700.

According to an exemplary embodiment, the electronic device can change a 3D object by reflecting a viewing angle when photographing a 3D image through a depth camera. For example, when the user views a 3D image 810 displayed on the display 800 placed horizontally as shown in FIG. 8A, and inclines parts 802 and 804 of the display 800 in the middle of viewing the 3D image 810 as shown in FIG. 8B, the electronic device can change the images 812 and 814 displayed on the inclined part. According to an exemplary embodiment, the electronic device can change the 3D image in proportion to the inclination speed of the display 800. According to an embodiment, the electronic device can change the 3D image in proportion to the inclination angle of the display 800. However, this should not be considered as limiting and the image change module 220 can change the image by reflecting a viewing angle in the curvature of the display 800.

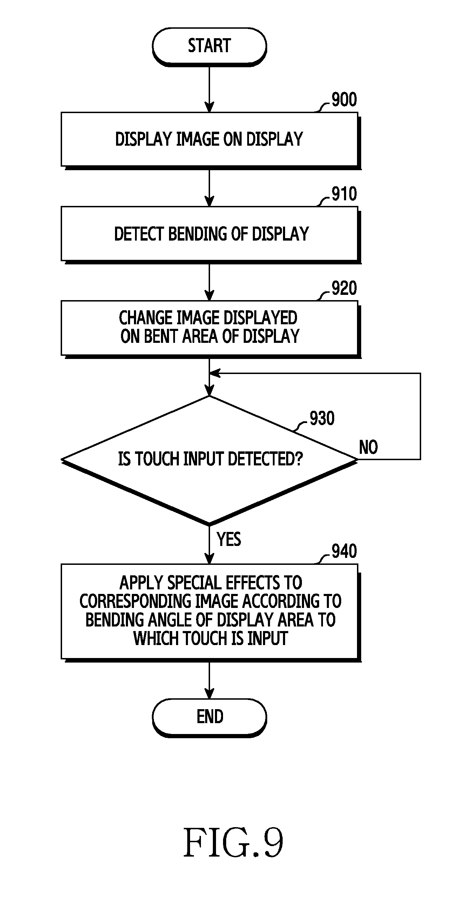

FIG. 9 illustrates a flowchart showing a method for changing an image displayed on a display according to an exemplary embodiment of the present disclosure.

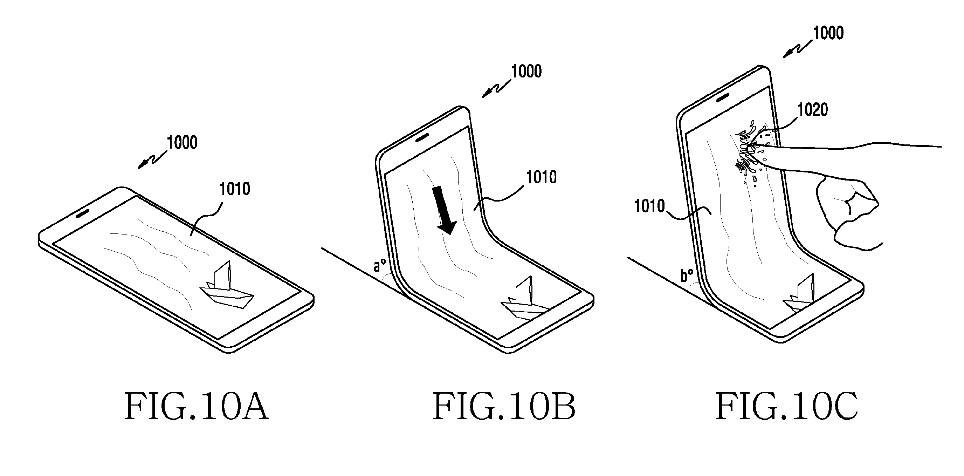

Referring to FIG. 9, in operation 900, an electronic device (for example, the electronic device 100) can display an image on a display of the electronic device. The image can include a lock screen image or an application image. For example, an electronic device 1000 can display a lake image on a display 1010 as shown in FIG. 10A. According to an embodiment, the electronic device 1000 can be in a state in which a 3D image or a video is being executed.

In operation 910, the electronic device can detect bending of the display. According to an embodiment, the electronic device 1000 can detect a change in the curvature of the display 1010 as shown in FIG. 10B. The display 1010 can include a flexible display or a dual display. According to an exemplary embodiment, the electronic device 1000 can detect the degree of bending or crooking of the display 1010 through at least one sensor (for example, a 9-axis sensor, a flex sensor, and the like) installed in a specific area.

In operation 920, the electronic device can change an image displayed on the bent area of the display. According to an exemplary embodiment, when a part of the display 1010 is inclined as shown in FIG. 10B, the electronic device 1000 can display the water of the lake flowing down according to the speed and the angle of the inclination. For example, as the speed and the angle of the inclination of the display 1010 are greater, the water of the lake can be displayed as flowing more swiftly, and, as the speed and the angle of the inclination of the display 1010 are smaller, the water of the lake can be displayed as flowing more calmly.

In operation 930, the electronic device can determine whether a touch input is detected or not on the display. According to an exemplary embodiment, the electronic device can detect a touch input on the display by a finger or an input pen.

When the touch input is detected, the electronic device can apply special effects to the corresponding image according to the bending angle of the display part on which the touch is inputted in operation 940. For example, the electronic device can output a set image according to a touch on each area of the display. According to an exemplary embodiment, when the user touches the bent area of the display 1010 as shown in FIG. 10C, the electronic device 1000 can show a bubble effect 1020 in response to the touch input. For example, when the user touches a horizontal area of the display 1010, the electronic device 1000 can show an effect making a swell spread in all directions in response to the touch input. However, this should not be considered as limiting and an outputted image can be variously set according to a touch.

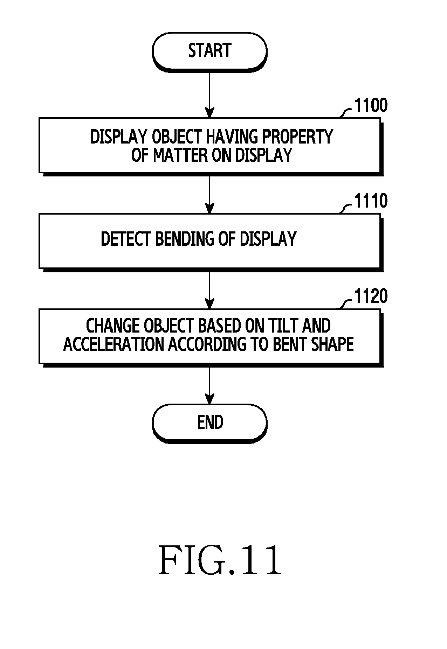

FIG. 11 illustrates a flowchart showing a method for changing an image displayed on a display according to an exemplary embodiment of the present disclosure.

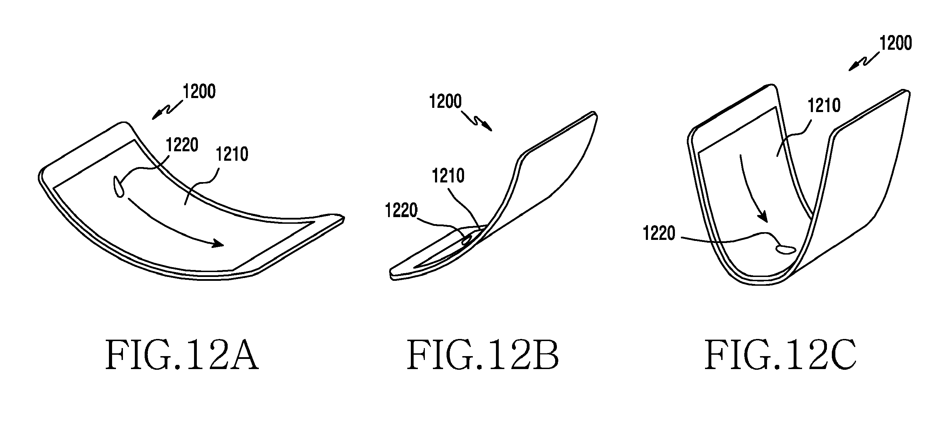

Referring to FIG. 11, in operation 1100, an electronic device (for example, the electronic device 100) can display an object having a property of matter on a display. Such an object can have various properties of matter reacting to a tilt, gravity, or acceleration. For example, an electronic device 1200 can display an object 1220 like a water drop on a display 1210 as shown in FIG. 12A.

In operation 1110, the electronic device can detect bending of the display. According to an exemplary embodiment, the electronic device 1200 can detect a change in the curvature of the display 1210 as shown in FIG. 12A or 12B. The display 1210 can include a flexible display or a dual display. According to an exemplary embodiment, the electronic device 1200 can detect the degree of bending or crooking of the display 1210 through at least one sensor (for example, a 9-axis sensor, a flex sensor, etc.) installed in a specific area.

In operation 1120, the electronic device can change the object based on the tilt and acceleration of the display according to the bending shape of the display. According to an exemplary embodiment, when the left side of the display 1210 is bent as shown in FIG. 12A or the right side of the display 1210 is bent as shown in FIG. 12B, the water drop object 1220 can slide to the left side or right side of the display 1210. For example, the electronic device can display an effect making the object 1220 look as if the object 1220 is partially absorbed into paper while moving to the left side or right side on the display 1210. According to an exemplary embodiment, when the left side and the right side of the display 1210 are bent simultaneously, the object 1220 can be located at the center by the gravity. In addition, the object 1220 can be absorbed into a specific material according to its property of matter and can be deleted after a predetermined time. According to an exemplary embodiment, the water drop is illustrated as an example of the objet but the object is not limited to this. For example, the object can be a thing or living thing which can be moved or have its shape changed.

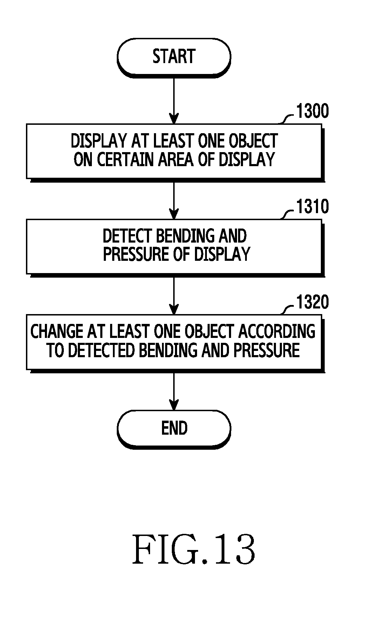

FIG. 13 illustrates a flowchart showing a method for changing an image displayed on a display according to an exemplary embodiment of the present disclosure.

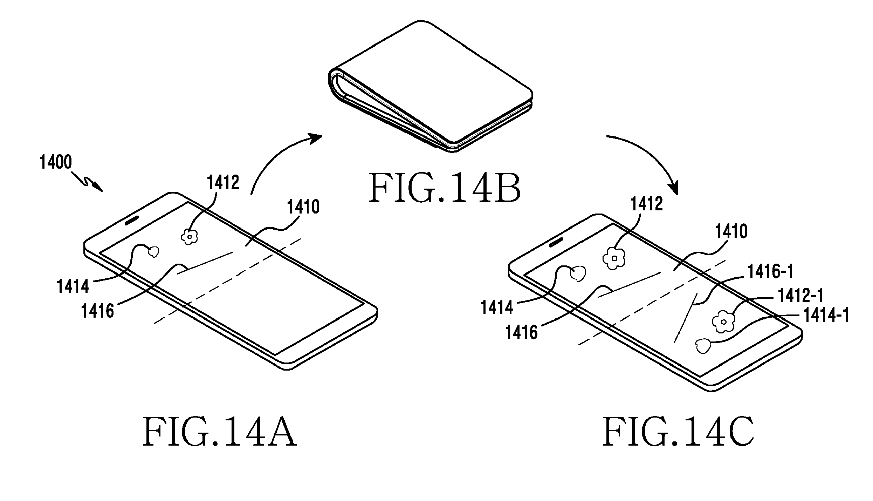

Referring to FIG. 13, in operation 1300, an electronic device (for example, the electronic device 100) can display at least one object on a certain area of a display. According to an exemplary embodiment, as shown in FIG. 14A, an electronic device 1400 can display specific objects 1412, 1414, and 1416 on a specific area of a display 1410. For example, the objects 1412, 1414, and 1416 can be selected by the user or can be drawn or inserted in a touch method.

In operation 1310, the electronic device can detect bending of the display and pressure. According to an exemplary embodiment, as shown in FIG. 14B, the electronic device 1400 can detect a change in the curvature of the display 1410 and pressure and determine that the display 1410 is folded in half. The display 1410 can include a flexible display or a dual display. According to an exemplary embodiment, the electronic device 1400 can detect the degree of bending and the degree of pressure of the display 1410 through at least one sensor (for example, a 9-axis sensor, a flex sensor, a pressure sensor, and the like) installed in a specific area of the electronic device 1400.

In operation 1320, the electronic device can change at least one object displayed on the display according to the detected bending and the pressure of the display. According to an embodiment, when the display 1410 is folded in half, the electronic device 1400 can provide a spreading effect for at least one of objects 1412, 1414, 1416 displayed on the display 1410. For example, at least one of objects 1412, 1414, 1416 can be larger or can spread larger than it was before the display 1410 is folded in half. According to an embodiment, when the display 1410 is folded in half and is compressed, the electronic device 1400 can display at least one of objects 1412-1, 1414-1, 1416-1 that are copies of the at least one of the corresponding objects on the display area on which the objects were not displayed. In some embodiment, the copies are symmetrical to the original images.
thereby providing a decalcomania effect.

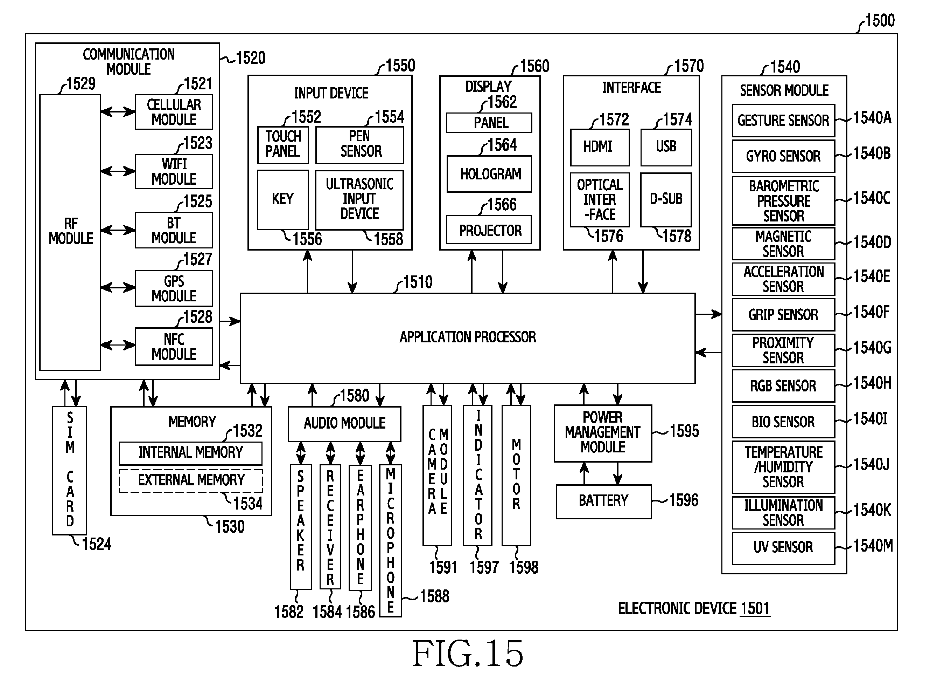

FIG. 15 illustrates a block diagram 1500 of an electronic device 1501 according to various exemplary embodiments of the present disclosure. The electronic device 1501 can configure the entirety or part of the electronic device 100 shown in FIG. 1.

Referring to FIG. 15, the electronic device 1501 can include one or more Application Processors (APs) 1510, a communication module 1520, a Subscriber Identification Module (SIM) card 1524, a memory 1530, a sensor module 1540, an input device 1550, a display 1560, an interface 1570, an audio module 1580, a camera module 1591, a power management module 1595, a battery 1596, an indicator 1597, or a motor 1598.

The AP 1510 can control a plurality of hardware or software elements connected to the AP 1510 by driving an operating system or an application program, and can process and calculate a variety of data including multimedia data. For example, the AP 1510 can be implemented by using a System on Chip (SoC). According to an exemplary embodiment, the AP 1510 can further include a Graphic Processing Unit (GPU) (not shown).

The communication module 1520 can transmit and receive data via communication between the electronic device 1501 (for example, the electronic device 100) and other electronic devices (for example, the electronic device 104 or the server 106) connected through a network. According to an exemplary embodiment, the communication module 1520 can include a cellular module 1521, a WiFi module 1523, a BT module 1525, a GPS module 1527, an NFC module 1528, and a Radio Frequency (RF) module 1529.

The cellular module 1521 can provide a voice call, a video call, a text service, or an internet service through a telecommunications network (for example, LTE, LTE-A, CDMA, WCDMA, UMTS, WiBro, GSM, and the like). In addition, the cellular module 1521 can identify and authenticate the electronic device in the telecommunications network by using a subscriber identification module (for example, the SIM card 1524). According to an exemplary embodiment, the cellular module 1521 can perform at least some of the functions provided by the AP 1510. For example, the cellular module 1521 can perform at least some of the multimedia control functions.

According to an exemplary embodiment, the cellular module 1521 can include a Communication Processor (CP). In addition, the cellular module 1521 can be implemented by using a SoC, for example. In FIG. 15, the cellular module 1521 (for example, the communication processor), the memory 1530, or the power management module 1595 are elements separate from the AP 1510. However, according to an exemplary embodiment, the AP 1510 can be configured to include at least some of the above-described elements (for example, the cellular module 1521).

According to an exemplary embodiment, the AP 1510 or the cellular module 1521 (for example, the communication processor) can load instructions or data received from a non-volatile memory connected therewith or at least one of the other elements into a volatile memory, and can process the instructions or data. In addition, the AP 1510 or the cellular module 1521 can store data which is received from at least one of the other elements or generated by at least one of the other elements in the non-volatile memory.

The WiFi module 1523, the BT module 1525, the GPS module 1527, or the NFC module 1528 each can include a processor for processing data received and transmitted through a corresponding module. In FIG. 15, the cellular module 1521, the WiFi module 1523, the BT module 1525, the GPS module 1527, or the NFC module 1528 is illustrated in a separate block. However, according to an exemplary embodiment, at least some (for example, two or more) of the cellular module 1521, the WiFi module 1523, the BT module 1525, the GPS module 1527, or the NFC module 1528 can be included in a single integrated chip (IC) or a single IC package. For example, at least some of the processors corresponding to the cellular module 1521, the WiFi module 1523, the BT module 1525, the GPS module 1527, and the NFC module 1528 (for example, the communication processor corresponding to the cellular module 1521 and the WiFi processor corresponding to the WiFi module 1523) can be implemented by using a single SoC.

The RF module 1529 can transmit and receive data, for example, can transmit and receive an RF signal. Although not shown, the RF module 1529 can include a transceiver, a Power Amp Module (PAM), a frequency filter, or a Low Noise Amplifier (LNA), for example. In addition, the RF module 1529 can further include a part for exchanging electromagnetic waves in a free space in wireless communication, for example, a conductor or conducting wire. In FIG. 15, the cellular module 1521, the WiFi module 1523, the BT module 1525, the GPS module 1527, and the NFC module 1528 share the single RF module 1529 with one another. However, according to an exemplary embodiment, at least one of the cellular module 1521, the WiFi module 1523, the BT module 1525, the GPS module 1527, or the NFC module 1528 can transmit and receive an RF signal through a separate RF module.

The SIM card 1524 can be a card including a subscriber identification module, and can be inserted into a slot formed on a specific location of the electronic device. The SIM card 1524 can include unique identification information (for example, an Integrated Circuit Card Identifier (ICCID)) or subscriber information (for example, International Mobile Subscriber Identity (IMSI)).

The memory 1530 (for example, the memory 130) can include an internal memory 1532 or an external memory 1534. For example, the internal memory 1532 can include at least one of a volatile memory (for example, a Dynamic Random Access Memory (DRAM), a Static Random Access Memory (SRAM), a Synchronous DRAM (SDRAM), and the like) and a non-volatile memory (for example, an One-Time Programmable Read Only Memory (OTPROM), a Programmable Read Only Memory (PROM), an Erasable Programmable Read Only Memory (EPROM), an Electrically Erasable Programmable Read Only Memory (EEPROM), a mask ROM, a flash ROM, a NAND flash memory, a NOR flash memory, and the like).

According to an exemplary embodiment, the internal memory 1532 can be a Solid State Drive (SSD). The external memory 1534 can further include a flash drive, for example, Compact Flash (CF), Secure Digital (SD), Micro-SD, Mini-SD, extreme-Digital (xD), a memory stick, and the like. The external memory 1534 can be functionally connected with the electronic device 1501 through various interfaces. According to an exemplary embodiment, the electronic device 1501 can further include a storage device (or a storage medium) such as a hard drive.

The sensor module 1540 can measure a physical quantity or detect an operation state of the electronic device 1501, and can convert measured or detected information into electric signals. The sensor module 1540 can include at least one of a gesture sensor 1540A, a gyro sensor 1540B, a barometric pressure sensor 1540C, a magnetic sensor 1540D, an acceleration sensor 1540E, a grip sensor 1540F, a proximity sensor 1540G, a color sensor 1540H (e.g., Red, Green, Blue (RGB) sensor), a biosensor 1540I, a temperature/humidity sensor 1540J, an illumination sensor 1540K, and a Ultraviolet (UV) sensor 1540M. Additionally or alternatively, the sensor module 1540 can include an E-nose sensor (not shown), an electromyography (EMG) sensor (not shown), an electroencephalogram (EEG) sensor (not shown), an electrocardiogram (ECG) sensor (not shown), an infrared ray (IR) sensor, an iris sensor (not shown), a fingerprint sensor (not shown), and the like. The sensor module 1540 can further include a control circuit to control at least one sensor included therein.

The input device 1550 can include a touch panel 1552, a (digital) pen sensor 1554, a key 1556, or an ultrasonic input device 1558. The touch panel 1552 can recognize a touch input in at least one method of capacitive, resistive, infrared, and ultrasonic methods. In addition, the touch panel 1552 can further include a control circuit (not shown). In the embodiment of a capacitive method, the touch panel 1552 can recognize physical contact or hovering. The touch panel 1552 can further include a tactile layer. In this embodiment, the touch panel 1552 can provide a tactile response to the user.

The (digital) pen sensor 1554 can be implemented in the same or similar method as or to the method of receiving a user's touch input or by using a separate detection sheet. The key 1556 can include a physical button, an optical key, or a keypad. The ultrasonic input device 1558 allows the electronic device 1501 to detect sound waves through a microphone (for example, the microphone 1588) through an input device generating ultrasonic signals, and is capable of wireless recognition. According to an exemplary embodiment, the electronic device 1501 can receive a user input from an external device connected thereto (for example, a computer or a server) by using the communication module 1520.

The display 1560 can include a panel 1562, a hologram device 1564, or a projector 1566. For example, the panel 1562 can be a Liquid Crystal Display (LCD) or an Active Matrix Organic Light Emitting Diode (AM-OLED). For example, the panel 1562 can be implemented to be flexible, transparent, or wearable. The panel 1562 can be configured as a single module along with the touch panel 1552. The hologram device 1564 can show a stereoscopic image in the air using interference of light. The projector 1566 can display an image by projecting light onto a screen. The screen can be located inside or outside the electronic device 1501. According to an exemplary embodiment, the display 1560 can further include a control circuit to control the panel 1562, the hologram device 1564, or the projector 1566.

The interface 1570 can include a High Definition Multimedia Interface (HDMI) 1572, a Universal Serial Bus (USB) 1574, an optical interface 1576, or D-subminiature (sub) 1578. The interface 1570 can be included in the communication interface 160 shown in FIG. 1. Additionally or alternatively, the interface 1570 can include a Mobile High Definition Link (MHL) interface, a Secure Digital (SD)/Multimedia Card (MMC) interface or Infrared Data Association (IrDA) standard interface.

The audio module 1580 can convert a sound and an electric signal bidirectionally. The audio module 1580 can process sound information which is input or output through a speaker 1582, a receiver 1584, an earphone 1586, or a microphone 1588.

The camera module 1591 is a device for photographing a still image and a moving image, and, according to an exemplary embodiment, the camera module 1591 can include one or more image sensors (for example, a front surface sensor or a rear surface sensor), a lens (not shown), an Image Signal Processor (ISP) (not shown), or a flash (memory) (for example, a Light Emitting Diode (LED) or a xenon lamp).

The power management module 1595 can manage power of the electronic device 1501. Although not shown, the power management module 1595 can include a Power Management IC (PMIC), a charger IC, or a battery or fuel gage. For example, the PMIC can be mounted in an integrated circuit or a SoC semiconductor.

The charging method can be divided into a wire charging method and a wireless charging method. The charger IC can charge a battery and can prevent inflow of overvoltage or over current from a charger. According to an exemplary embodiment, the charger IC can include a charger IC for at least one of the wire charging method and the wireless charging method. The wireless charging method can include a magnetic resonance method, a magnetic induction method, or an electromagnetic wave method, and an additional circuit for charging wirelessly, for example, a circuit such as a coil loop, a resonant circuit, a rectifier, and the like can be added.

For example, the battery gage can measure a remaining battery life of the battery 1596, a voltage, a current, or temperature during charging. The battery 1596 can store or generate electricity and can supply power to the electronic device 1501 by using stored or generated electricity. The battery 1596 can include a rechargeable battery or a solar battery.

The indicator 1597 can display a specific state of the electronic device 1501 or a part of it (for example, the AP 1510), for example, a booting state, a message state, or a charging state. The motor 1598 can convert an electric signal into a mechanical vibration. Although not shown, the electronic device 1501 can include a processing device (for example, a GPU) for supporting a mobile TV. The processing device for supporting the mobile TV can process media data according to standards such as Digital Multimedia Broadcasting (DMB), Digital Video Broadcasting (DVB), or media flow.

Each of the above-described elements of the electronic device according to various exemplary embodiments of the present disclosure can be comprised of one or more components, and the names of the elements can vary according to the kind of the electronic device. The electronic device according to various exemplary embodiments of the present disclosure can include at least one of the above-described elements, and some of the elements can be omitted or an additional element can be further included. In addition, some of the elements of the electronic device according to various exemplary embodiments of the present disclosure can be combined into a single entity, and can perform the same functions as those of the elements before being combined.

The term "module" used in various exemplary embodiments of the present disclosure refers to a unit including one of hardware, software, and firmware, or a combination of two or more of them, for example. For example, the "module" can be used interchangeably with terms like unit, logic, logical block, component or circuit. The "module" can be a minimum unit of an integrally configured part or a part of it. The "module" can be a minimum unit that performs one or more functions or a part of it. The "module" can be implemented mechanically or electronically. For example, the "module" according to various exemplary embodiments of the present disclosure can include at least one of an Application Specific Integrated Circuit (ASIC) chip, Field Programmable Gate Arrays (FPGAs), and a programmable logic device which perform any operation that is already well known or will be developed in the future.

At least part of the apparatus (for example, modules or functions) or method (for example, operations) according to various exemplary embodiments of the present disclosure can be implemented by using instructions stored in a computer-readable storage medium in the form of a programming module. When the instructions are executed by one or more processors (for example, the processor 120), the one or more processors can perform a function corresponding to the instructions. The computer-readable storage medium can be the memory 130, for example. At least part of the programming module can be implemented (for example, executed) by using the processor 120. At least part of the programming module can include a module, a program, a routine, sets of instructions, a process, and the like for performing one or more functions.

Examples of the computer-readable recording medium include magnetic media such as hard disks, floppy disks and magnetic tapes, optical media such as Compact Disc Read Only Memories (CD-ROMs) and Digital Versatile Disc (DVDs), magneto-optical media such as floptical disks, and hardware devices such as Read Only Memories (ROMs), Random Access Memories (RAMs) and flash memories that are especially configured to store and execute program commands (for example, the programming module). Examples of the program commands include machine language codes created by a compiler, and high-level language codes that can be executed by a computer by using an interpreter. The above-described hardware devices can be configured to operate as one or more software modules for performing operations of various exemplary embodiment of the present disclosure, and vice versa.

A module or programming module according to various exemplary embodiments of the present disclosure can include one or more of the above-described elements, can omit some elements, or may further include additional elements. The operations performed by the module, the programming module, or the other elements according to various exemplary embodiments of the present disclosure may be performed serially, in parallel, repeatedly, or heuristically. In addition, some operation may be performed in different order or may omitted, and an additional operation may be added.

According to various exemplary embodiments, the instructions stored in the storage medium may be set to allow at least one processor to perform at least one operation when the instructions are executed by the at least one processor, and the at least one operation may include: detecting a change in a curvature of a display, detecting a change in a gaze on the display, and changing an image displayed on the display based on the change in the curvature and the change in the gaze.

Although the present disclosure has been described with the above embodiments, various changes and modifications may be suggested to one skilled in the art. It is intended that the present disclosure encompass such changes and modifications as fall within the scope of the appended claims.

## Claims

1. A method for operating an electronic device, the method comprising:
displaying an image on a display of the electronic device;
detecting a change in a curvature of the display while displaying the image on the display;
in response to detecting the change in the curvature of the display, detecting a change in a gaze angle on the display; and
changing the displayed image based on the detected change in the curvature and the detected change in the gaze angle.

2. The method of claim 1, wherein detecting the change in the curvature of the display of the electronic device comprises detecting a change in an angle between the display and a surface.

3. The method of claim 1, wherein the change in the curvature of the display is detected through at least one of a 9-axis sensor or a flex sensor.

4. The method of claim 1, wherein detecting the change in the gaze angle on the display comprises detecting a change in an angle between the display and the gaze angle.

5. The method of claim 1, wherein the change in the gaze angle on the display is detected through at least one image sensor.

6. The method of claim 1, wherein changing the displayed image based on the detected change in the curvature and the detected change in the gaze angle comprises changing an image displayed on a part of the display based on an angle between the part of the display and the surface or a bending speed of the part of the display.

7. The method of claim 6, further comprising:
detecting a touch input on the image displayed on the part of the display; and
outputting a set image based on the touch input.

8. The method of claim 1, further comprising:
detecting a tilt angle of the display and an acceleration of the change in the curvature of the display; and
changing the image displayed on the display based on the detected tilt angle and the acceleration of the change.

9. The method of claim 1, further comprising:
detecting the change in the curvature of the display and a change of pressure on the display; and
displaying an image to be symmetrical to the image displayed on the display based on the detected change in the curvature and the change of the pressure on the display.

10. The method of claim 1, further comprising:
displaying an object having a property of matter on the display; and
changing the object based on a shape of the display.

11. An electronic device comprising:
a first sensor;
a second sensor;
a display configured to display an image; and
a processor configured to:
detect a change in a curvature of the display while displaying the image on the display using the first sensor;
in response to detecting the change in the curvature of the display, detect a change in a gaze angle on the display using the second sensor; and
change the displayed image based on the detected change in the curvature and the detected change of the gaze angle.

12. The electronic device of claim 11, wherein the first sensor includes at least one of a 9-axis sensor or a flex sensor configured to detect a change in an angle between the display and a surface.

13. The electronic device of claim 11, wherein the second sensor includes at least one image sensor configured to detect a change in an angle between the display and the gaze angle.

14. The electronic device of claim 11, wherein the processor is further configured to change an image displayed on a part of the display based on an angle between the part of the display and the surface or a bending speed of the inclined portion of the display.

15. The electronic device of claim 14, wherein the processor is further configured to detect a touch input on the image displayed on the part of the display, and output a set image based on the detected touch input.
